# DEMANDE DE BREVET EUROPEEN

(11) **EP 3 399 365 A1**
(43) Date de publication de la demande: **07.11.2018**
(21) Numéro de dépôt: 18290046.4
(22) Date de dépôt: 02.05.2018
(51) Int. Cl.: G02C 5/00, B29D 12/02, G02C 7/10, G02C 7/02, G02C 5/02

(54) **NOUVEAU PROCÉDÉ DE FABRICATION DE LUNETTES SOLAIRES RÉALISÉES EN UN MATÉRIAU SYNTHÉTIQUE, NOTAMMENT EN ACÉTATE, AINSI QUE LES LUNETTES OBTENUES PAR LEDIT PROCÉDÉ**

(30) Priorité: 04.05.2017 FR 1700477
(71) Demandeur: ACHD, 75005 Paris (FR)
(72) Inventeur: Cagniard, Amaury, 75006 Paris (FR)
(74) Mandataire: Gallochat, Alain

(57) **Abrégé**

La présente invention concerne un nouveau procédé de fabrication de lunettes solaires réalisées en un matériau synthétique, notamment en acétate, ainsi que les lunettes obtenues par ledit procédé.

Le procédé de fabrication de lunettes selon l'invention consiste en les étapes suivantes :
- usinage du matériau en vue d'aboutir à un produit ayant la forme de la monture (7) des lunettes,
- défonçage du produit obtenu à l'étape précédente pour donner la forme des verres (8), jusqu'à arriver à l'épaisseur souhaitée pour lesdits verres,
- polissage des verres ainsi obtenu.

Outre la monture (7) et les verres (8), les lunettes obtenues selon le procédé de l'invention sont constituées d'une seule couche d'acétate ou autre matériau synthétique (6), des branches (9) étant solidarisées à la monture (7) de façon connue.

Application à la réalisation de lunettes de soleil.

## Description

La présente invention concerne un nouveau procédé de fabrication de lunettes solaires réalisées en un matériau synthétique, notamment en acétate, ainsi que les lunettes obtenues par ledit procédé.

Il existe de nombreuses variétés de matières et de procédés permettant la fabrication de lunettes. L'évolution des techniques de fabrication dans ce domaine est modeste depuis de nombreuses années, hormis certaines techniques d'assemblages qui se sont peu à peu automatisées ou robotisées.

Parmi les différents matériaux envisageables, il en existe un qui se détache du lot tant par ses qualités mécaniques que par ses qualités esthétiques et ergonomiques, offrant de nombreuses possibilités de teintes, de textures, de transparences, d'adaptabilité - pas de risque allergique, formage facile, anti-UV, durabilité : l'acétate de cellulose, ci-après dénommé dans la suite de la présente description, l' « acétate ». C'est donc à l'heure actuelle, en termes de valeur de ventes, le matériau le plus utilisé pour la fabrication de lunettes en Europe.

S'il existe par ailleurs certaines lunettes réalisées en matière plastique injectée ou en impression 3D, qui ne nécessitent par définition aucun usinage, les lunettes en acétate sont réalisées à partir d'une matière première d'origine naturelle qui est livrée sous forme de plaques de grandes dimensions ou de bandes, de différentes couleurs, textures, épaisseurs et transparences possibles. Ces plaques ou ces bandes sont découpées par des moyens mécaniques classiques (fraises, lasers, scies...). En fonction du style et de la forme désirés on peut faire varier à l'infini les dimensions ainsi que les contours et tailles des verres qui leur sont associés. Ces verres sont sertis à la main dans une fente intérieure usinée dans la monture après que celle-ci a été assouplie préalablement par chauffage.

Ces différentes opérations s'effectuent à partir de plaques monobloc ou possiblement, pour des questions d'aspect, à partir de plusieurs plaques superposées, généralement soudées entre elles à froid, voire éventuellement à chaud. Cette dernière opération est dans ce cas, à la fois pour des raisons d'ordre mécanique et d'ordre esthétique, réalisée avant usinage, y compris pour les lunettes sans verres correcteurs (lunettes solaires principalement). L'opération ultime consiste donc à chauffer la monture puis à sertir chaque verre à l'intérieur de son logement. Ainsi, les contraintes de fabrication concernant ce dernier type de lunettes, dont la valeur intrinsèque est généralement inférieure à celle des lunettes correctrices et la finalité moins médicale, restent identiques à ce jour à celles des lunettes correctrices.

Le brevet JP H03 69910 consiste à assembler une plaque découpée qui est ensuite courbée afin d'être fixée sur des éléments en injection et rapportés (contours, branches, principalement) ; contrairement à la présente invention les bords (encadrement) ne sont pas solidaires dès le départ de la partie transparente et la partie transparente est juste découpée et courbée à force tout en s'assemblant avec ce cadre. Par ailleurs, il n'est pas possible de réaliser de telles lunettes en acétate compte tenu des contraintes mécaniques en question.

D'autres brevets, comme par exemple le brevet US 3,526,449, le brevet US 2,516,373, la demande internationale WO2005/119341, la demande internationale WO95/10064, la demande de brevet européen EP 2 980 629 décrivent des lunettes où les montures et les verres sont d'un seul tenant, mais dans tous ces documents, les lunettes sont obtenues par des procédés d'injection plastique.

L'objet de la présente invention concerne un nouveau procédé de fabrication de lunettes solaires réalisées en un matériau synthétique, notamment en acétate, ainsi que les lunettes obtenues par ledit procédé.

Les lunettes selon l'invention sont du type comportant une monture à laquelle sont fixées des branches, ladite monture comprenant au moins une couche de matériau synthétique tel que l'acétate, les verres desdites lunettes consistant en une fine couche dudit matériau préférentiellement située du côté de l'observateur, ladite monture et lesdits verres formant un seul et même ensemble. On entend par observateur, la personne située en face de l'utilisateur qui porte les lunettes.

De façon plus précise, le procédé de fabrication de lunettes selon l'invention consiste en les étapes suivantes :
- usinage du matériau en vue d'aboutir à un produit ayant la forme de la monture (4), (7) ou (10), (15) des lunettes,
- défonçage du produit obtenu à l'étape précédente pour donner la forme des verres (5), (8), (11), (17), jusqu'à arriver à l'épaisseur souhaitée pour lesdits verres,
- polissage des verres ainsi obtenu.

Selon une première variante d'exécution, ladite monture comporte deux couches, la couche extérieure, tournée vers l'observateur, étant transparente et réalisée en un matériau synthétique, notamment en acétate de faible épaisseur, la couche intérieure, également réalisée en un matériau synthétique tel que l'acétate adhérant à ladite couche extérieure par soudage à froid ou tout autre moyen, lesdites deux couches ayant la même forme.

Selon une deuxième variante d'exécution, ladite monture comporte une seule couche, réalisée en un matériau synthétique, notamment en acétate, les verres faisant partie intégrante de ladite couche.

Le procédé d'obtention de la première variante consiste à faire adhérer notamment par soudage à froid deux couches de matériau synthétique tel que l'acétate, dont l'une est transparente de faible épaisseur, à usiner cet ensemble de façon à donner la forme de la monture, à défoncer l'ensemble pour donner la forme des verres, de façon à ne laisser subsister au niveau des verres que ladite couche transparente, puis à fixer les branches.

Le procédé d'obtention de la deuxième variante d'exécution consiste à usiner une plaque de matériau synthétique tel que l'acétate de façon à lui donner la forme de la monture, à défoncer l'ensemble pour donner la forme des verres, de façon à ne laisser subsister au niveau des verres qu'une couche de faible épaisseur transparente.

D'autres caractéristiques de la présente invention ressortiront mieux à la lecture de la description qui va suivre, référence étant faite aux figures données à titre indicatif et nullement limitatif parmi lesquelles :
- la Figure 1 est une vue en perspective avant des lunettes selon une première variante d'exécution ;
- la Figure 2 est une vue en perspective arrière des lunettes représentées à la Figure 1 ;
- la Figure 3 est une vue en perspective avant des lunettes selon une deuxième variante d'exécution ;
- la Figure 4 est une vue en perspective arrière des lunettes représentées à la Figure 3 ;
- la Figure 5 est une vue en perspective avant des lunettes selon une troisième variante d'exécution ;
- la Figure 6 est une vue en perspective arrière des lunettes selon une quatrième variante d'exécution.

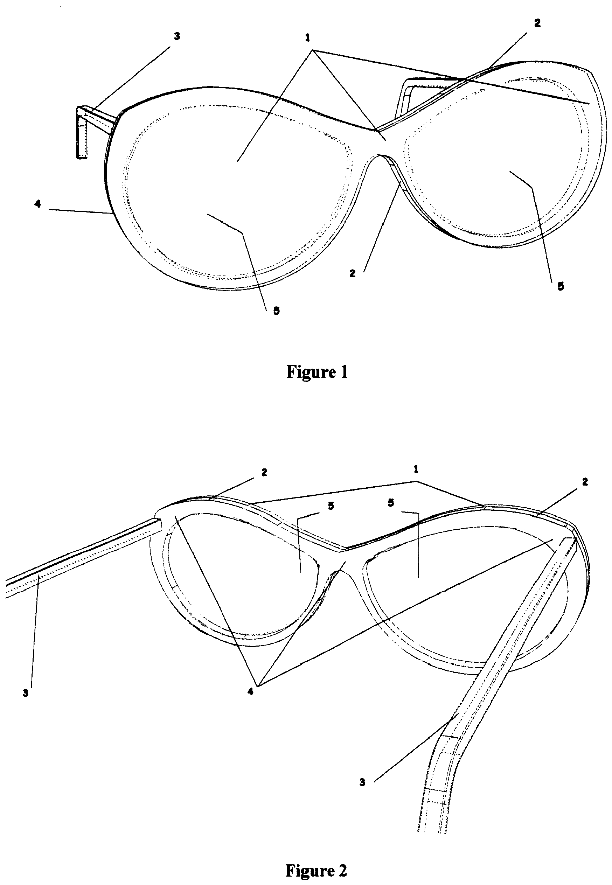

Les lunettes représentées aux Figures 1 et 2 correspondent à une première variante d'exécution. Elles comprennent une première couche (1) de faible épaisseur (5/10^{ème} mm à quelques mm par exemple) réalisée en acétate anti-UV, filtrant, teinté et transparent, et une deuxième couche (2) de 3 - 5 mm d'épaisseur par exemple, également réalisée en acétate qui pourra être opaque ; des branches (3) fixées de façon connue à la monture (4), constituée de la couche (2), complètent ces lunettes, la couche (1) étant préférentiellement située du côté de l'observateur.

Bien que cela ne soit pas représenté ici, il sera aussi possible d'envisager que la couche (2) comporte elle-même plusieurs couches, par exemple une couche de papier ou de tissu prise en sandwich entre deux couches d'acétate, en fonction du design souhaité, soudées à froid les unes aux autres.

Afin d'élaborer cette variante illustrée aux Figures 1 et 2, on adhérera, notamment par soudage à froid, les couches (1) et (2) de façon à former un ensemble, puis on usinera cet ensemble de façon à lui donner la forme de la monture (4) des lunettes, la couche (1) recouvrant l'intégralité de la monture (4) étant du côté de l'observateur ; il sera alors procédé au défonçage de la couche (2) pour donner la forme des verres (5) constitués de la couche (1). Dans la présente description, le terme « défonçage » correspond à une technique consistant à creuser de la matière à l'aide d'outils connus par l'homme du métier. Un tel défonçage se fera sur toute l'épaisseur de la couche (2), voire un peu plus afin d'arriver à l'épaisseur souhaitée pour les verres (5) ; un polissage des verres (5) complétera ce travail. Les branches (3) seront solidarisées à la monture (4) par tout moyen connu.

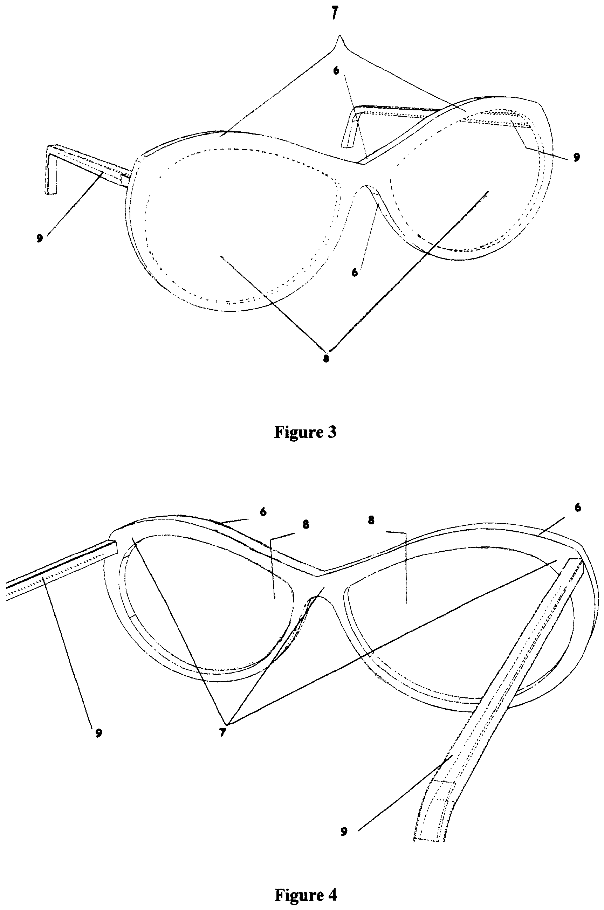

Les Figures 3 et 4 illustrent une deuxième variante d'exécution des lunettes selon l'invention où une seule couche d'acétate est utilisée. La couche d'acétate (6) constitue à la fois la monture (7) et les verres (8) où la couche d'acétate présente une faible épaisseur (5/10^{ème} mm à quelques mm par exemple) ; les branches (9) fixées de façon connue à la monture (7) complètent ces lunettes.

Le procédé d'obtention de cette deuxième variante consiste à utiliser une plaque d'acétate dont l'épaisseur est de l'ordre de plusieurs mm, pouvant atteindre 8 mm selon l'effet choisi ; cette plaque est réalisée en un acétate opaque, semi-opaque, ou transparent, teinté, anti-UV et filtrant, présentant une transparence au niveau des verres en raison de la faible épaisseur de ces derniers. Cette plaque (6) est usinée de façon à lui donner la forme de la monture (7) selon le design choisi. Cette monture est alors défoncée par tout moyen connu pour donner la forme des verres (8) ; ce défonçage s'effectuera jusqu'à obtenir l'épaisseur désirée pour les verres (8), pouvant atteindre jusqu'à 2 mm, ce qui correspond sensiblement à l'épaisseur des verres solaires standards. Comme dans le cas de la première variante d'exécution, un polissage des verres (8) complétera ce travail et les branches (9) seront solidarisées à la monture (7) par tout moyen connu.

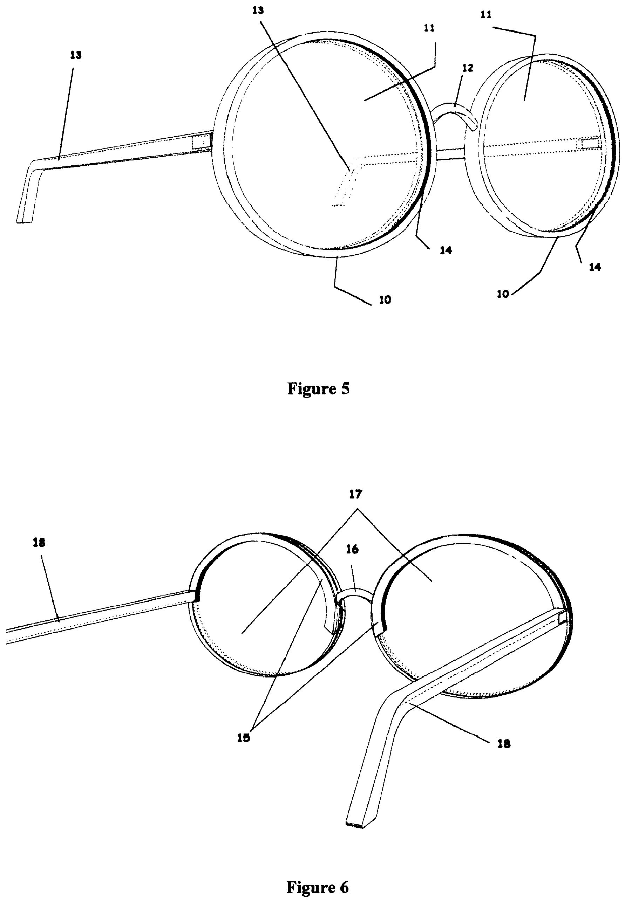

Selon les première et deuxième variantes d'exécution, la monture (4), (7) est d'un seul tenant ; il en va différemment pour les troisième et quatrième variantes d'exécution illustrées respectivement aux Figures 5 et 6.

Pour ces troisième et quatrième variantes, la monture se présente en effet en deux parties reliées par un pontet.

La Figure 5 présente des lunettes comportant une monture constituée de deux parties (10) dotées de verres (11), reliées de façon connue par un pontet (12) auxquelles sont fixées également de façon connue les branches (13).

Cette variante est réalisée en utilisant le procédé décrit ci-dessus pour la deuxième variante ; facultativement, il sera également possible, avant de procéder au polissage, de creuser lesdits verres (11) sur toute leur surface du côté de l'observateur afin de créer un rebord (14) et protégeant ainsi ladite surface contre tout frottement pouvant occasionner une dégradation desdits verres par leur contact sur une surface abrasive. Un tel rebord peut également être pratiqué sur la deuxième variante précédemment décrite au niveau de la monture (7).

La Figure 6 illustre des lunettes selon une quatrième variante de réalisation des lunettes selon l'invention. Cette variante dérive en fait de la troisième variante en ce que les deux parties (15) de la monture reliées de façon connue par un pontet (16) ont été usinées de telle sorte que lesdites parties (15) sont présentes uniquement sur sensiblement la moitié supérieure des verres (17), alors que dans la variante illustrée à la Figure 5, les deux parties (10) correspondent à l'intégralité du pourtour des verres (11) ; des branches (18) fixées de façon connue sensiblement à l'extrémité inférieure des parties (15) complètent cette variante de lunettes. Un rebord identique au rebord (14) pourra être prévu au niveau des parties (15).

La variante illustrée à la Figure 6 permet, compte tenu de la technique utilisée de se dispenser d'un support pour la partie inférieure des verres ; il existe en effet toutes sortes de lunettes solaires pour lesquelles plus de la moitié inférieure du verre n'est pas encadrée comme en partie supérieure mais rendue solidaire du support supérieur, sur lequel sont assemblées les branches latérales et le nez, par l'intermédiaire soit d'un contour métallique soit au minimum d'un fil nylon ajoutés. Le verre séparé, qui est en effet dans tous ces cas de figure rapporté mécaniquement à l'intérieur de ladite monture doit impérativement y être raccordé de façon solide. Comme il est montré sur la Figure 6, la partie (15) et le verre (17) étant réalisés à partir d'une même plaque, lesdits verres (17) sont solidaires des parties (15), et ne forment qu'un élément, de sorte qu'un tel système de montage par contour métallique ou fil de nylon n'a pas lieu d'être.

Les variantes illustrées aux Figures 5 et 6 sont préférentiellement réalisées en utilisant le procédé décrit pour la deuxième variante, mais peuvent également être réalisées en utilisant le procédé décrit pour la première variante.

Dans les variantes illustrées aux Figures 3 à 6, les verres sont du côté de l'observateur et la monture du côté de l'utilisateur ; il serait également possible, bien que cela ne soit pas un mode de réalisation préférentiel, d'avoir les verres du côté de l'utilisateur et la monture du côté de l'observateur.

Quelle que soit la variante d'exécution, la monture et les verres sont solidaires et ne forment qu'un seul et même ensemble, soit parce qu'ils ont été réalisés à partir de deux couches distinctes d'acétate soudées entre elles, à froid, ou adhérant entre elles par tout autre procédé, soit parce qu'ils ont été réalisés à partir d'une seule couche d'acétate.

Les avantages obtenus grâce aux lunettes selon l'invention sont multiples :
- on abaisse le coût de revient de l'ensemble en économisant la fourniture de verres solaires, sans avoir à fournir en contrepartie de matière première supplémentaire puisqu'on utilise ici une matière qui est habituellement détruite (partie évidée des montures) ;
- on évite tout problème mécanique éventuel pouvant être lié à l'ajustement imparfait des verres sur leur monture ainsi que toute main d'oeuvre de pose, avec une meilleure fiabilité dans le temps de l'ensemble ainsi constitué ;
- on améliore la rigidité globale, les parties centrales des montures évidées étant supprimées, avec la possibilité de diminuer ainsi, à rigidité égale, l'épaisseur matière de la monture, donc le poids total de l'ensemble ainsi que, une nouvelle fois, le prix de revient ;
- on augmente enfin, tout en conservant la même protection solaire qu'avec des verres ajoutés, la palette de variantes esthétiques et la possibilité de moduler les épaisseurs, les teintes et les couleurs matière sur les tranches des montures ainsi qu'à l'avant de celles-ci.

L'épaisseur variable de la partie remplaçant les verres ajoutés permet par ailleurs de modifier l'intensité de la teinte en fonction des besoins, celle-ci se réduisant proportionnellement à la diminution de l'épaisseur de matière résultant de l'opération de défonçage. Par ailleurs, l'ensemble des avantages ergonomiques et techniques liés à une monture classique est préservé.

Comme cela a été indiqué précédemment, l'acétate à partir duquel sont formés la monture et les verres répond à certaines caractéristiques : il est opaque, semi-opaque ou transparent, teinté, anti-UV, filtrant et peut avoir été traité anti-rayures et/ou antireflets et/ou présenter un effet polarisant. Sans pour autant sortir du cadre de la présente invention, d'autres matériaux synthétiques, présentant les mêmes caractéristiques que celles précédemment citées peuvent être utilisés pour réaliser des lunettes selon l'invention, en utilisant l'un ou l'autre des procédés décrits ; ainsi, les lunettes pourront-elles être également réalisées en polycarbonate ou en plexiglas, ou en un autre matériau équivalent. S'agissant du défonçage intervenant quelle que soit la variante des lunettes, celui-ci se fera par tout moyen connu, notamment par fraisage.

Les lunettes solaires selon l'invention pourront avantageusement remplacer les lunettes solaires connues à ce jour, étant entendu que lesdites lunettes selon l'invention ne sont pas des lunettes à verres correcteurs.

## Revendications

**1.** Procédé de fabrication de lunettes réalisées en un matériau synthétique tel que l' acétate, comprenant une monture et des verres, ladite monture et lesdits verres constituant une seule pièce, **caractérisé en ce qu'**il comprend les étapes suivantes :
- usinage du matériau en vue d'aboutir à un produit ayant la forme de la monture (4), (7) ou (10), (15) des lunettes,
- défonçage du produit obtenu à l'étape précédente pour donner la forme des verres (5), (8), (11), (17), jusqu'à arriver à l'épaisseur souhaitée pour lesdits verres,
- polissage des verres ainsi obtenus.

**2.** Procédé selon la revendication 1 **caractérisé en ce que** ledit matériau se présente, avant l'usinage de la première étape, sous forme de deux couches dudit matériau synthétique, à savoir une couche (1) constituant les verres (5), préférentiellement dirigée vers l'observateur, et une couche (2) constituant la monture (4) desdites lunettes.

**3.** Procédé selon la revendication 2 **caractérisé en ce que** lesdites deux couches (1), (2) sont soudées à froid avant ledit usinage.

**4.** Procédé selon l'une des revendications 2 ou 3, **caractérisé en ce que** ladite couche (1) a une épaisseur comprise entre 5/10^{ème} mm à quelques mm, ladite couche (2) ayant une épaisseur de quelques mm.

**5.** Procédé selon l'une quelconque des revendications 2 à 4, **caractérisé en ce que** ladite couche (1) est transparente, ladite couche (2) étant opaque.

**6.** Procédé selon la revendication 1 **caractérisé en ce que** ledit matériau se présente, avant l'usinage de la première étape sous forme d'une seule couche (6) constituant la monture (7), (10), (15) et les verres (8), (11), (17) desdites lunettes.

**7.** Procédé selon la revendication 4 **caractérisé en ce que**, suite audit défonçage, lesdites parties (15) sont présentes uniquement sur sensiblement la moitié supérieure des verres (17).

**6.** Procédé selon l'une quelconque des revendications 1 à 5 **caractérisé en ce que** ledit matériau constituant les lunettes est de l'acétate, opaque, semi-opaque ou transparent, teinté, anti-UV, filtrant.

**7.** Procédé selon la revendication 6 **caractérisé en ce que** ledit matériau a été traité anti-rayures et/ou antireflets et/ou présente un effet polarisant.

**8.** Lunettes comprenant notamment une monture (4), (7) ou (10), (15) et deux verres (5), (8), (11), (17), **caractérisées en ce qu'**elles sont obtenues selon le procédé de l'une quelconque des revendications 1 à 7.

**9.** Lunettes selon la revendication 8, **caractérisées en ce que** la monture (7) se compose de deux parties (10), (15) reliées par un pontet (12), (16).

**10.** Lunettes selon la revendication 9, **caractérisées en ce que** ladite monture (7), ou chacune des parties (10), 15), comprend un rebord (14) situé du côté de l'observateur.

**11.** Lunettes selon l'une quelconque des revendications 8 à 10, **caractérisées en ce qu'**elles sont en outre munies de branches (3), (9), (13) et (18).
